# EUROPEAN PATENT SPECIFICATION

(11) **EP 3 808 938 B1**
(45) Date of publication and mention of the grant of the patent: **10.04.2024**
(21) Application number: 20201639.0
(22) Date of filing: 13.10.2020
(51) Int. Cl.: F01D 5/14, F01D 5/28, F01D 9/04, F01D 5/18

(54) **AIRFOIL COMPONENT WITH TRAILING END MARGIN AND CUTBACK**
BAUTEIL MIT AERODYNAMISCHEM PROFIL MIT EINEM RAND AN DER HINTERKANTE UND EINEM EINSCHNITT
COMPOSANT À PROFIL AÉRODYNAMIQUE AVEC UNE MARGE AU BORD DE FUITE COMPORTANT UNE ÉCHANCRURE

(30) Priority: 18.10.2019 US 201916656918
(43) Date of publication of application: 21.04.2021
(73) Proprietor: RTX Corporation, Farmington, CT 06032 (US)
(72) Inventor: LILES, Howard J., Newington, CT 06111 (US); FARRAR, Bryan H., West Hartford, CT 06107 (US); DUBE, Bryan P., Columbia, CT 06237 (US)
(74) Representative: Dehns

(56) References cited:
- US-A1- 2005 106 028
- US-A1- 2015 016 972
- US-A1- 2018 023 397
- US-B2- 9 963 974

## Description

### TECHNICAL FIELD

The present invention relates to an airfoil component for a gas turbine engine and to a gas turbine engine.

### BACKGROUND

A gas turbine engine typically includes a fan section, a compressor section, a combustor section, and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section.

The compressor section can include rotors that carry airfoils to compress the air entering the compressor section. A shaft may be coupled to the rotors to rotate the airfoils.

US2015/016972 A1 discloses a turbine vane assembly comprising a vane made from ceramic matrix composite material having an outer wall extending between a leading edge and a trailing edge and between a first end and an opposing second end; an endwall made at least partially from a ceramic matrix composite material configured to engage the first end of the vane; and a retaining region including corresponding bi-cast grooves formed adjacent the first end of the vane and a receiving aperture formed in the endwall; wherein a bond is formed in the retaining region to join the vane and endwall together

US2018/023397 A1 discloses a blade includes an airfoil body defined by a concave pressure side outer wall and a convex suction side outer wall that connect along a leading edge and a trailing edge. The blade also includes a first corrugated surface extending from the trailing edge to the leading edge on an outer surface of the concave pressure side outer wall, and/or a second corrugated surface extending from the trailing edge to the leading edge on an outer surface of the convex suction side outer wall.

US9963974 B2 discloses a reduction in excitation amplitudes affecting turbine blade durability in a turbine nozzle assembly having a plurality of vanes and turbine blades, includes: identifying a turbine blade design of the turbine nozzle assembly; performing a modal model analysis of at least one of the turbine blades in the turbine blade design; reducing aerodynamic impact by ensuring that each of the turbine blades is free of aero-excitation from an upstream flow at the vanes in an operating speed range; identifying blade natural frequencies with respect to the nozzle vanes; and modifying a trailing edge of at least one of the vanes to reduce the excitation amplitudes.

US2005/106028 A1 discloses a turbine blade having a root region, a tip region and a blade airfoil, a rounded portion being formed between the root region and the blade airfoil, and relief slots passing through the blade trailing edge in the region of this rounded portion, thermal expansions being compensated for and thus thermal stresses being minimized by these relief slots.

### SUMMARY

From a first aspect, the invention provides an airfoil component as recited by claim 1.

In a further embodiment of the first aspect of the invention, the axial face is planar.

In a further embodiment of the first aspect of the invention, the laminated ceramic matrix composite includes silicon carbide ceramic fibers disposed in a silicon carbide ceramic matrix.

From a further aspect, the invention provides a gas turbine engine as recited by claim 4.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example gas turbine engine.
Figure 2 illustrates an airfoil component of the engine.
Figure 3A illustrates an enlarged view of a section of the airfoil component of Figure 2.
Figure 3B illustrates an enlarged view of a section of the airfoil component of Figure 2 from a different angle.
Figure 4 illustrates an enlarged view of a section of another example airfoil component.

### DETAILED DESCRIPTION

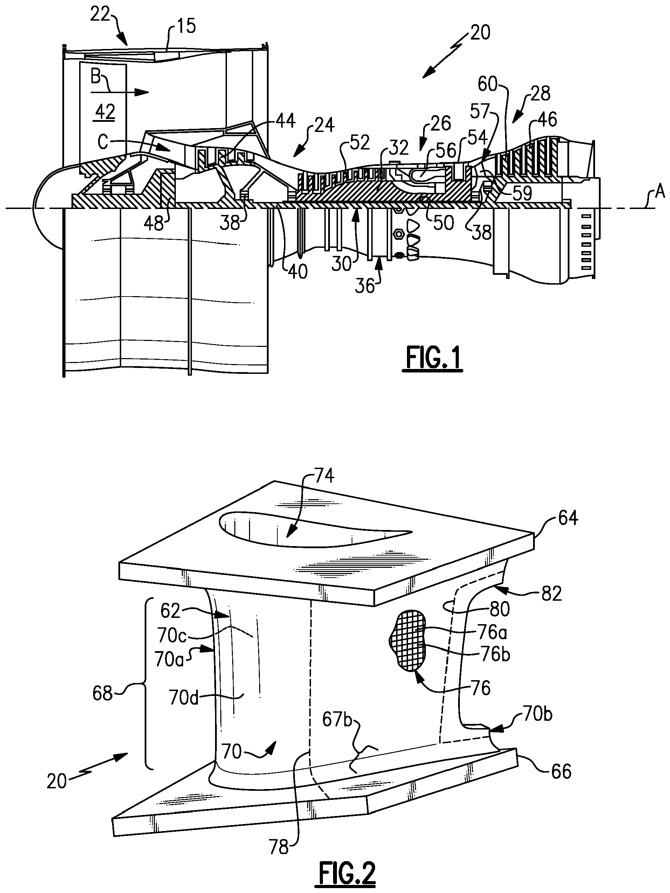

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. Terms such as "axial," "radial," "circumferential," and variations of these terms are made with reference to the engine central axis A. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^0.5 (where 1°R is about -272°C). The "Low corrected fan tip speed" as disclosed herein according to one non-limiting embodiment is less than about 1150 ft / second (350.5 meters/second).

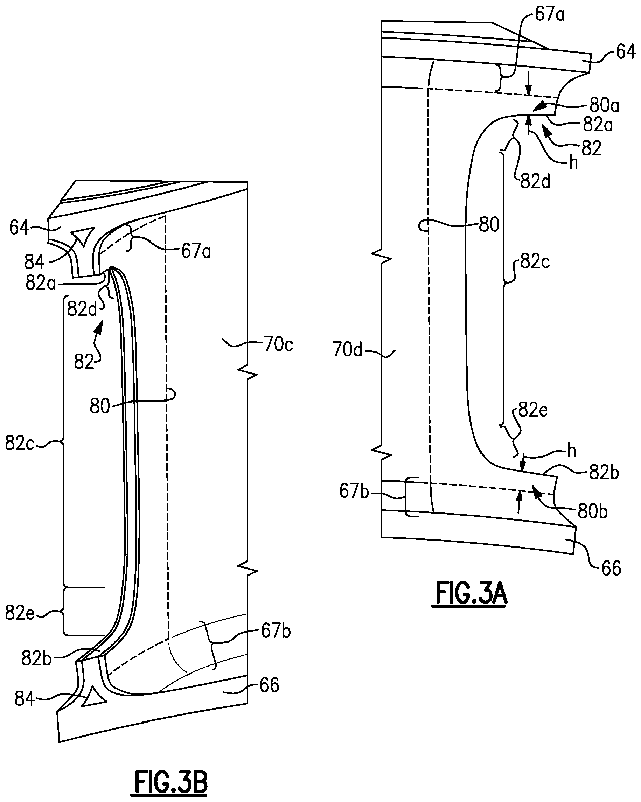

Figure 2 illustrates a representative airfoil component 60 from the turbine section 28 of the engine 20. In this example, the airfoil component 60 is a vane arc segment, although the examples herein may also be applied to a blade. A plurality of vane arc segments are situated in a circumferential row about the engine central axis A. The airfoil component 60 is comprised of a continuous airfoil piece 62. The continuous airfoil piece 62 includes several sections, including first (outer) and second (inner) platforms 64/66 and an airfoil section 68 that extends between the first and second platforms 64/66. There are first and second fillets 67a/67b that join the respective platforms 64/66 and the airfoil section 68 (fillet 67a is not in view in Figure 2 but is shown in Figures 3A and 3B). The airfoil section 68 is comprised of an airfoil wall 70 that defines a leading end 70a, a trailing end 70b, and pressure and suction sides 70c/70d. The airfoil section 68 includes at least one internal passage 74. The internal passage 74 may be connected to a cooling air source, such as the compressor section 24, to receive cooling air.

The continuous airfoil piece 62 is formed of ceramic. The ceramic is a ceramic matrix composite ("CMC"). Example ceramic material may include, but is not limited to, silicon-containing ceramics. The silicon-containing ceramic may be, but is not limited to, silicon carbide (SiC) or silicon nitride (Si₃N₄). An example CMC may be a SiC/SiC CMC in which SiC fibers are disposed within a SiC matrix. As used herein, "formed of" refers to the structural self-supporting body of the airfoil piece 62, rather than a conformal body such as a coating.

In one example, the ceramic is a laminated ceramic matrix composite 76, shown in a cutaway portion in Figure 2. For example, the laminated ceramic matrix composite 76 includes a ceramic matrix 76a and ceramic fibers 76b disposed in the ceramic matrix 76a. For example, the ceramic matrix 76a may be, but is not limited to, silicon carbide (SiC) and the ceramic fibers 76b may be, but is not limited to, silicon carbide (SiC) fibers.

The laminated ceramic matrix composite 76 is comprised of fiber plies, one of which is represented schematically at 78, that are arranged in a stacked configuration and formed to the desired geometry of the airfoil piece 62. For instance, the fiber plies 78 may be layers or tapes that are laid-up one on top of the other to form the stacked configuration. The fiber plies 78 may be woven or unidirectional, for example. At least a portion of the fiber plies 78 are continuous through the first platform 64, the airfoil section 68, and the second platform 66. In this regard, the word "continuous" in the phrase "continuous airfoil piece" refers to the continuous airfoil piece 62 having fiber plies 78 that are uninterrupted through the first platform 64, the airfoil section 68, and the second platform 66.

Some types of airfoil components have internal cooling channels that extend in an axially aft direction and exit through the trailing end of the airfoil. The airfoil component 60, however, is of a design that has a solid trailing end, i.e., without internal cooling channels that exit through the trailing end. For example, the airfoil section 68 includes a trailing end margin 80 that is solid from the suction side 70d to the pressure side 70c. The trailing end margin 80 is a solid extent or region of the airfoil section 68 at the trailing end 70b. The trailing end margin 80 has a trailing edge cutback 82. As used herein, an "end" refers to a region and an "edge" refers to a terminal face. In this regard, the "trailing edge" of the airfoil section 68 is the terminal face of the airfoil section 68, while the "trailing end" of the airfoil section 68 is the trailing region in the vicinity of the trailing edge.

Figure 3A illustrates an enlarged view of the cutback 82 looking toward the suction side 70d, and Figure 3B illustrates an enlarged view of the cutback 82 from a location aft of the cutback and looking back at the pressure side 70c. The cutback 82 in the illustrated example of the vane arc segment includes first and second radial faces 82a/82b, an axial face 82c, and first and second curved corners 82d/82e that join the respective radial faces 82a/82b and the axial face 82c. In the illustrated example, the axial face 82c is planar to facilitate maintaining strength at the terminal face. However, if conditions permit, the axial face 82c may alternatively be rounded off, i.e., curved.

The cutback 82 can be formed by initially fabricating the airfoil section 68 with a full trailing end margin, and then cutting, machining, or otherwise removing a portion of the margin 80 to form the cutback 82. Such removal may be conducted after full consolidation of the airfoil component 60 or prior to full consolidation during a green or brown state of the ceramic processing. Alternatively, the cutback 82 may be formed by initially fabricating the airfoil section 68 with the cutback 82, i.e., without cutting, machining, or removal. In this regard, a "cutback" refers either to either a region that has been physically removed and/or a region that has been excluded or left open by design. That is, the "cutback" does not necessarily require or imply actual cutting.

The cutback 82 of the trailing end margin 80 serves to modify the flow area between the airfoil components 60 in the engine 20 in comparison to the same or similar airfoil components that do not have the cutback. As an example based on the turbine section 28, the above-mentioned circumferential row of vane arc segments are designed with a nominal design flow area. However, due to manufacturing tolerances, the actual flow area may vary from the nominal design flow area. The cutback 82 increases the flow area in comparison to the same or similar airfoil components that do not have the cutback and may thereby be used to adjust the flow area to meet the nominal design flow area.

In the airfoil component 60, the cutback 82 is radially spaced from the fillets 67a/67b such that there are narrow strips, i.e., first and second structural legs 80a/80b, that extend between the respective fillets 67a/67b and the radial faces 82a/82b of the cutback 82. The structural legs 80a/80b may serve to facilitate control of distribution of stress and strain at the trailing end 70b. For instance, as discussed above, the platforms 64/66 may have a tendency to deflect radially outwards under thermal gradients and stresses. This tendency may result in elevated stress levels at the trailing end 70b. The absence of material in the cutback 82, however, reduces the stiffness at the trailing end 70b, thereby redistributing the stresses/strains that would have otherwise occurred in the trailing end but for the cutback 82. Additionally, the cutback 82 also eliminates a region that would otherwise be at a high temperature, thereby also facilitating the mitigation of thermal stress.

The structural legs 80a/80 define radial heights (h) from the respective fillets 67a/67b to the respective radial faces 82a/82b. The axial depth of the cutback 82, as well as the radial heights (h) of the structural legs 80a/80b and the shape of the first and second curved corners 82d/82e, influence the size of the cutback 82, and thus the magnitude of the flow area provided by the cutback 82. The axial depth of the cutback 82, the radial heights (h), and the shape of the first and second curved corners 82d/82e may therefore be adjusted in order to change the flow area and/or to modify the stress distribution effects of the structural legs 80a/80b. In one example, the radial heights (h) may also be selected with regard to the presence and location of noodle regions 84 in the fillets 67a/67b. A "noodle region" is a gap in a laminated composite leading up to a location where fiber plies meet, most typically located where the plies form radii. Such gaps are often filled with material so that there is not an open void. Here, the radial heights (h) of the structural legs 80a/80b may be selected so as to provide a desired clearance from the noddle regions 84 to avoid incursion into the noodle regions 84 when cutting or removing the margin 80 to form the cutback 82 (if formed by cutting or removal). The structural legs 80a/80b may also serve to reinforce the vicinity around the noodle regions 84.

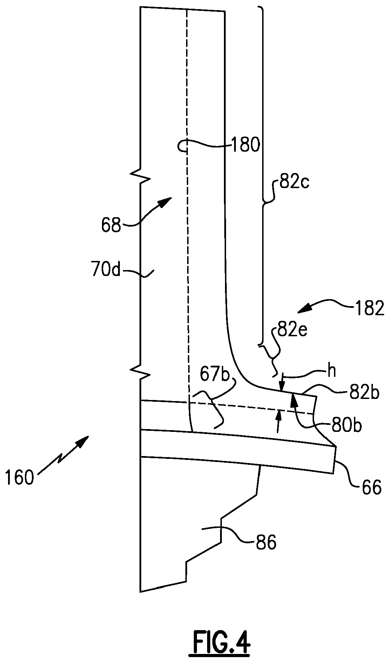

Figure 4 illustrates an enlarged view of another example component 160. In this disclosure, like reference numerals designate like elements where appropriate and reference numerals with the addition of one-hundred or multiples thereof designate modified elements that are understood to incorporate the same features and benefits of the corresponding elements. In this example, the airfoil component 160 is a turbine blade. As such, the component 160 does not have the outer platform 64 and may additionally include a root, generally represented at 86, for securing the blade into a slot in a turbine disk in a known manner. As those skilled in the field will appreciate, the specific aerodynamic shape of the airfoil section 68 and platform 66 of the blade will differ from that of the vane. Most notably, however, since the blade does not have an outer platform, the geometry of the trailing edge margin 180 and cutback 182 of the blade differs somewhat from the trailing end margin 80 and cutback 82 of the vane. Here, without the outer platform, there is no structural leg 80a or radial face 82a. The blade, therefore, has only a single structural leg 80b and a single radial face 82b.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims, which solely define the invention.

## Claims

1. An airfoil component (60) for a gas turbine engine (20) comprising:
an airfoil piece (62) formed of a ceramic, the airfoil piece (62) defining a first platform (64) and an airfoil section (68) extending from the first platform (64), the airfoil section (68) including suction and pressure sides (70d, 70c), a leading end a trailing end (70b), and a trailing end margin (80) that is solid from the suction side (70d) to the pressure side (70c),
**characterised by** the trailing end margin (80) having a trailing edge cutback (82),
wherein the airfoil piece (62) includes a fillet (67) joining the first platform (64) and the airfoil section (68), and the trailing end margin (80) includes a first structural leg (80a) extending between the fillet (67) and the trailing edge cutback (82),
wherein the airfoil piece (62) is formed of a laminated ceramic matrix composite, the airfoil piece (62) defining the first platform (64) and a second platform (66), the airfoil section (68) extending between the first and second platforms (64, 66),
wherein the airfoil piece (62) includes a first fillet (67a) joining the first platform (64) and the trailing end margin (80) and a second fillet (67b) joining the second platform (66) and the trailing end margin (80),
wherein the trailing end margin (80) includes the first structural leg (80a) and a second structural leg (80b) extending between, respectively, the first fillet (67a) and the trailing edge cutback (82) and the second fillet (67b) and the trailing edge cutback (82),
wherein the trailing edge cutback (82) includes first and second opposed radial faces (82a, 82b), an axial face (82c), and first and second curved corners (82d, 82e) joining, respectively, the first radial face (82a) and the axial face (82c) and the second radial face (82b) and the axial face (82c), and
wherein the trailing edge cutback (82) is radially spaced from the first fillet (67a) and from the second fillet (67b) such that there are narrow strips that extend between the respective first and second fillets (67a, 67b) and the respective first and second radial faces (82a, 82b) of the trailing edge cutback (82) to form the respective first and second legs (80a, 80b).

2. The airfoil component (60) as recited in any preceding claim, wherein the axial face (82c) is planar.

3. The airfoil component (60) as recited in any preceding claim, wherein the laminated ceramic matrix composite includes silicon carbide ceramic fibers disposed in a silicon carbide ceramic matrix.

4. An gas turbine engine (20) comprising:
a compressor section (24);
a combustor (56) in fluid communication with the compressor section (24); and
a turbine section in fluid communication with the combustor, the turbine section (28) including an airfoil component (60) as recited in any preceding claim.

## Patentansprüche

1. Schaufelprofilbauteil (60) für ein Gasturbinentriebwerk (20), umfassend:
ein aus einer Keramik gebildetes Schaufelprofilstück (62), wobei das Schaufelprofilstück (62) eine erste Plattform (64) und einen sich von der ersten Plattform (64) erstreckenden Schaufelprofilabschnitt (68) definiert, wobei der Schaufelprofilabschnitt (68) eine Saug- und eine Druckseite (70d, 70c), ein vorderes Ende, ein hinteres Ende (70b) und einen Rand (80) des hinteren Endes beinhaltet, der von der Saugseite (70d) zu der Druckseite (70c) massiv ist,
**dadurch gekennzeichnet, dass** der hintere Endrand (80) einen Hinterkanteneinschnitt (82) aufweist,
wobei das Schaufelprofilstück (62) eine Ausrundung (67) beinhaltet, die die erste Plattform (64) und den Schaufelprofilabschnitt (68) miteinander verbindet, und der hintere Endrand (80) einen ersten Strukturschenkel (80a) beinhaltet, der sich zwischen der Ausrundung (67) und dem hinteren Kanteneinschnitt (82) erstreckt,
wobei das Schaufelprofilstück (62) aus einem laminierten Keramikmatrixverbundstoff gebildet ist, wobei das Schaufelprofilstück (62) die erste Plattform (64) und eine zweite Plattform (66) definiert, wobei sich der Schaufelprofilabschnitt (68) zwischen der ersten und der zweiten Plattform (64, 66) erstreckt,
wobei das Schaufelprofilstück (62) eine erste Ausrundung (67a), die die erste Plattform (64) und den hinteren Endrand (80) verbindet, und eine zweite Ausrundung (67b), die die zweite Plattform (66) und den hinteren Endrand (80) verbindet, beinhaltet,
wobei der hintere Endrand (80) den ersten Strukturschenkel (80a) und einen zweiten Strukturschenkel (80b) beinhaltet, die sich jeweils zwischen der ersten Hohlkehle (67a) und dem hinteren Kanteneinschnitt (82) und der zweiten Hohlkehle (67b) und dem hinteren Kanteneinschnitt (82) erstrecken,
wobei der Hinterkanteneinschnitt (82) erste und zweite gegenüberliegende radiale Flächen (82a, 82b), eine axiale Fläche (82c) und erste und zweite gekrümmte Ecken (82d, 82e) beinhaltet, die jeweils die erste radiale Fläche (82a) und die axiale Fläche (82c) und die zweite radiale Fläche (82b) und die axiale Fläche (82c) verbinden, und
wobei der Hinterkanteneinschnitt (82) radial von der ersten Hohlkehle (67a) und von der zweiten Hohlkehle (67b) beabstandet ist, sodass es schmale Streifen gibt, die sich zwischen den jeweiligen ersten und zweiten Hohlkehlen (67a, 67b) und den jeweiligen ersten und zweiten radialen Flächen (82a, 82b) des Hinterkanteneinschnitts (82) erstrecken, um die jeweiligen ersten und zweiten Schenkel (80a, 80b) zu bilden.

2. Schaufelprofilbauteil (60) nach einem der vorhergehenden Ansprüche, wobei die axiale Fläche (82c) eben ist.

3. Schaufelprofilbauteil (60) nach einem der vorhergehenden Ansprüche, wobei der laminierte Keramikmatrix-Verbundwerkstoff Siliciumcarbid-Keramikfasern beinhaltet, die in einer Siliciumcarbid-Keramikmatrix angeordnet sind.

4. Gasturbinentriebwerk (20), umfassend:
einen Verdichterabschnitt (24);
eine Brennkammer (56) in Fluidverbindung mit dem Verdichterabschnitt (24); und
einen Turbinenabschnitt, der mit der Brennkammer in Fluidverbindung steht, wobei der Turbinenabschnitt (28) ein Schaufelprofilbauteil (60), wie in einem der vorhergehenden Ansprüche beschrieben, beinhaltet.

## Revendications

1. Composant à profil aérodynamique (60) pour un moteur à turbine à gaz (20) comprenant :
une pièce de profil aérodynamique (62) formée d'une céramique, la pièce de profil aérodynamique (62) définissant une première plateforme (64) et une section de profil aérodynamique (68) s'étendant à partir de la première plateforme (64), la section de profil aérodynamique (68) comportant des extrados et intrados (70d, 70c), une extrémité d'attaque, une extrémité de fuite (70b) et une marge d'extrémité de fuite (80) qui est solide de l'extrados (70d) à l'intrados (70c),
**caractérisé en ce que** la marge d'extrémité de fuite (80) a une découpe de bord de fuite (82),
dans lequel la pièce de profil aérodynamique (62) comporte un congé (67) joignant la première plateforme (64) et la section de profil aérodynamique (68), et la marge d'extrémité de fuite (80) comporte une première jambe structurelle (80a) s'étendant entre le congé (67) et la découpe de bord de fuite (82),
dans lequel la pièce de profil aérodynamique (62) est formée d'un composite stratifié à matrice céramique, la pièce de profil aérodynamique (62) définissant la première plateforme (64) et une seconde plateforme (66), la section de profil aérodynamique (68) s'étendant entre les première et seconde plateformes (64, 66),
dans lequel la pièce de profil aérodynamique (62) comporte un premier congé (67a) joignant la première plateforme (64) et la marge d'extrémité de fuite (80) et un second congé (67b) joignant la seconde plateforme (66) et la marge d'extrémité de fuite (80),
dans lequel la marge d'extrémité de fuite (80) comporte la première jambe structurelle (80a) et une seconde jambe structurelle (80b) s'étendant, respectivement, entre le premier congé (67a) et la découpe de bord de fuite (82) et le second congé (67b) et la découpe de bord de fuite (82),
dans lequel la découpe de bord de fuite (82) comporte des première et seconde faces radiales opposées (82a, 82b), une face axiale (82c), et des premier et second coins incurvés (82d, 82e) joignant, respectivement, la première face radiale (82a) et la face axiale (82c) et la seconde face radiale (82b) et la face axiale (82c), et
dans lequel la découpe de bord de fuite (82) est radialement espacée du premier congé (67a) et du second congé (67b) de sorte qu'il y ait des bandes étroites qui s'étendent entre les premier et second congés (67a, 67b) respectifs et les première et seconde faces radiales (82a, 82b) respectives de la découpe de bord de fuite (82) pour former les première et seconde jambes (80a, 80b) respectives.

2. Composant à profil aérodynamique (60) selon une quelconque revendication précédente, dans lequel la face axiale (82c) est plane.

3. Composant à profil aérodynamique (60) selon une quelconque revendication précédente, dans lequel le composite stratifié à matrice céramique comporte des fibres céramiques de carbure de silicium disposées dans une matrice céramique de carbure de silicium.

4. Moteur à turbine à gaz (20) comprenant :
une section de compresseur (24) ;
une chambre de combustion (56) en communication fluidique avec la section de compresseur (24) ; et
une section de turbine en communication fluidique avec la chambre de combustion, la section de turbine (28) comportant un composant à profil aérodynamique (60) selon une quelconque revendication précédente.
